# FASCICULE DE BREVET EUROPEEN

(11) **EP 1 775 216 B1**
(45) Date de publication et mention de la délivrance du brevet: **07.03.2012**
(21) Numéro de dépôt: 06122231.1
(22) Date de dépôt: 13.10.2006
(51) Int. Cl.: B64D 11/00, A47J 39/00, B08B 3/00

(54) **Chariot auto-nettoyant de transport de plateaux-repas**
Selbstreinigender Wagen zum Transport und Verteilen von Essen auf Tabletts
Self cleaning trolley for carrying and distributing food trays

(30) Priorité: 13.10.2005 FR 0510433
(43) Date de publication de la demande: 18.04.2007
(73) Titulaire: Electro Calorique, 69330 Pusignan (FR)
(72) Inventeur: Brossat, Pierre, 69006, Lyon (FR)
(74) Mandataire: Thibault, Jean-Marc

(56) Documents cités:
- WO-A-92/10711
- FR-A- 2 733 890

## Description

La présente invention concerne le domaine technique du transport et de la distribution de repas à l'aide de plateaux sur lesquels sont disposés des mets et divers ustensiles nécessaires à la consommation des aliments.

L'objet de l'invention trouve une application particulièrement avantageuse dans le domaine du transport et de la distribution de repas en milieu hospitalier.

D'une manière habituelle, un plateau-repas est destiné à recevoir des mets froids et chauds, placés dans des récipients adaptés à la nature des aliments. Selon le procédé, dit en liaison chaude, les mets chauds sont, dès leur préparation, acheminés et conservés à la température de consommation jusqu'au moment de leur distribution au consommateur. Dans le procédé, dit en liaison froide, les mets chauds sont mis à la température de consommation juste avant leur distribution au consommateur, dans la mesure où ils ont été rapidement refroidis dès la fin de leur préparation, en vue d'un stockage au froid pouvant atteindre plusieurs jours.

Le transport et la distribution de plateaux-repas sont réalisés par l'intermédiaire de chariots comportant une enveloppe alimentaire isolante, accessible par au moins une porte et délimitant au moins deux compartiments séparés dont l'un, dit froid, est destiné à recevoir la partie des plateaux pourvue des ustensiles et des mets froids, tandis que l'autre, dit chaud, reçoit la partie du plateau sur laquelle reposent les récipients contenant les mets chauds.

Selon un exemple de réalisation, le chariot de transport est destiné à être raccordé à une borne fixe de production de froid et de chaud. La borne fixe comporte une source d'air froid susceptible de pulser l'air à l'intérieur du compartiment froid du chariot, lorsque ce dernier est accolé à la borne de production. La borne fixe délivre également une chaleur dans le compartiment chaud pour la remise en température des mets chauds.

Selon un autre exemple de réalisation, le compartiment chaud est équipé de moyens de chauffage. Par exemple, ces moyens de chauffage peuvent être réalisés par une série de plaques électriques superposées, montées dans le compartiment chaud, pour venir chauffer individuellement chacun des plateaux-repas.

Pour des raisons évidentes d'hygiène, de tels chariots de transport et de distribution de plateaux-repas doivent être régulièrement être nettoyés. Pour tenter d'apporter une solution à ce problème, la demande de brevet FR 2 733 890 décrit un appareil de distribution de plateaux-repas comportant des buses raccordées à un raccord rapide pour le nettoyage. Une telle solution ne donne pas satisfaction en pratique car elle ne permet pas de nettoyer correctement et facilement l'enceinte alimentaire de réception des plateaux-repas. Cette solution ne permet pas, en effet, d'assurer un nettoyage correct, notamment dans les recoins, formés par les différentes conformations en saillie et en creux présentées par l'enceinte alimentaire. Cette difficulté de nettoyage est d'autant plus grande pour des chariots équipés de plaques de chauffage superposées.

L'objet de l'invention vise donc à remédier aux inconvénients de l'art antérieur en proposant une technique permettant un nettoyage simple, sûr et efficace d'un chariot de transport de plateaux-repas.

Pour répondre à un tel objectif, le chariot selon l'invention est conforme à la revendication 1.

Selon une autre variante avantageuse de réalisation, le chariot comporte au moins une canalisation de distribution de la vapeur à l'intérieur de chaque gaine de circulation d'air, dites externes, situées à l'extérieur de l'enveloppe alimentaire isolante.

De préférence, le chariot comporte une conduite de distribution équipée du raccord et sur laquelle sont raccordées les canalisations de distribution.

Par exemple, l'enveloppe alimentaire isolante délimite au moins un compartiment froid et au moins un compartiment chaud, équipés chacun d'une gaine de circulation d'air, dans chacune de laquelle est montée une canalisation de distribution de vapeur.

Dans un exemple de réalisation, le compartiment chaud est équipé de moyens de chauffage superposés.

Avantageusement, le chariot comporte une soupape de sécurité.

Un autre objet de l'invention vise à proposer une installation pour assurer le nettoyage ou la désinfection d'un chariot isotherme de distribution de plateaux-repas conforme à l'invention.

A cet effet, l'installation comporte :
■ au moins un chariot conforme à l'invention,
■ et un générateur de vapeur pourvu de moyens de raccordement temporaire au raccord équipant un chariot.

Avantageusement, le générateur fournit une vapeur de nettoyage et/ou de désinfection.

Par exemple, le générateur fournit une vapeur lorsque la porte du chariot est fermée.

Avantageusement, le générateur de vapeur est relié soit aux canalisations de distribution, soit à un pistolet de nettoyage manuel.

Diverses autres caractéristiques ressortent de la description ci-dessus faite en référence aux dessins annexés qui montrent, à titre d'exemples non limitatifs, des formes de réalisation de l'objet de l'invention.
La Figure 1 est une vue schématique d'un exemple de réalisation d'une installation de nettoyage et/ou de désinfection d'un chariot isotherme de distribution de plateaux-repas conforme à l'invention.
La **Figure 2** est une vue éclatée d'un chariot isotherme conforme à l'invention.
La **Figure 3** est une vue de face d'un chariot isotherme illustré à la **Fig. 2****.**

L'objet de l'invention concerne un chariot isotherme **1,** destiné à assurer le stockage et le transport de plateaux-repas, non représentés. Classiquement, le chariot **1** est équipé de moyens de roulement **2** et comporte une enveloppe alimentaire isolante **3,** aménagée pour délimiter au moins un compartiment **4,** dit froid, et un compartiment **5,** dit chaud, accessibles par au moins une porte **6.** Bien entendu, les compartiments chaud et froid sont destinés à recevoir, respectivement, les mets chauds et les mets froids des plateaux-repas. De manière toute aussi habituelle, l'enveloppe alimentaire isolante **3** est pourvue de moyens de support permettant le maintien, en position superposée, de plateaux-repas.

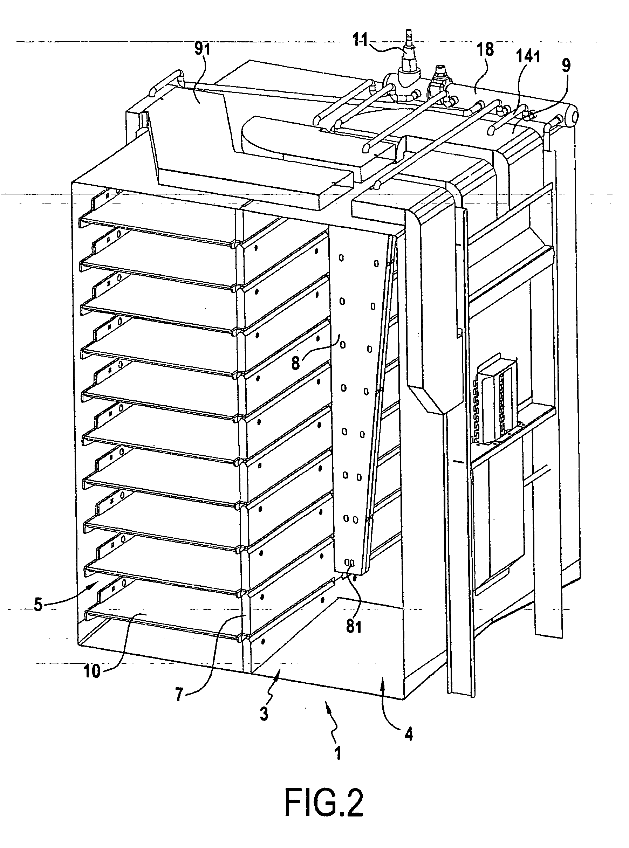

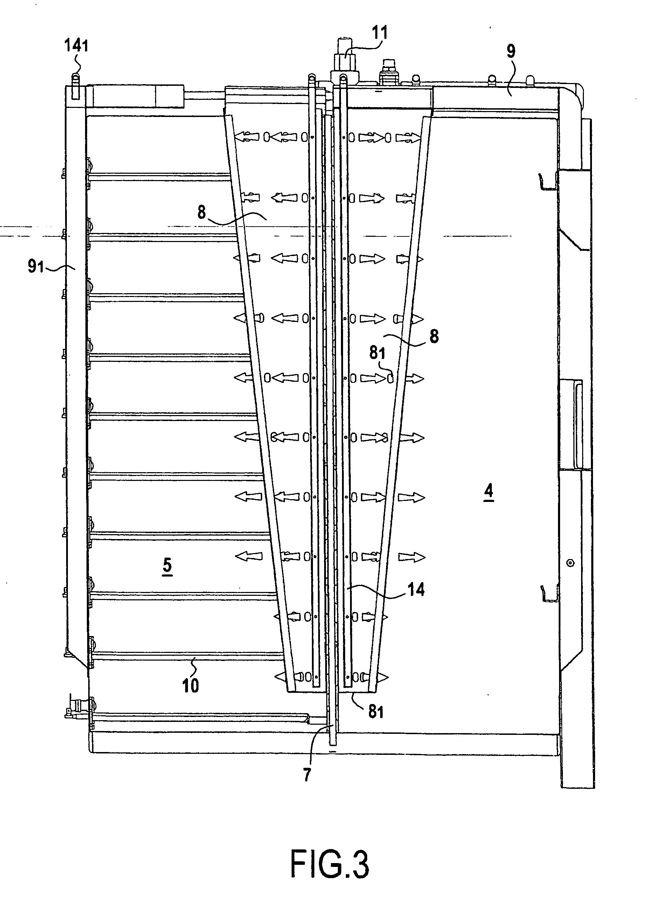

Tel que cela ressort plus précisément des **Fig. 2** et **3****,** les compartiments froid **4** et chaud **5** sont séparés par une cloison de séparation **7.** Dans l'exemple de réalisation illustré, les compartiments chaud **5** et froid **4** s'ouvrent de part et d'autre du chariot, de manière à permettre le positionnement des plateaux-repas de part et d'autre des faces opposées du chariot. Bien entendu, l'objet de l'invention peut s'appliquer à un chariot dont le volume interne est accessible uniquement par l'un de ses côtés.

Dans l'exemple de réalisation illustré, les compartiments chaud **5** et froid **4** sont équipés de gaines **8** pour la circulation de l'air froid. Tel que cela ressort des **Fig. 2** et **3****,** une gaine **8** s'étend, à partir de la cloison de séparation **7,** dans chacun des compartiments **4, 5,** à partir de la paroi supérieure de l'enceinte, en direction de la paroi inférieure. Dans chaque compartiment **4, 5,** une gaine **8** s'étend ainsi pour former une paroi de butée ou de séparation entre les deux parties des plateaux-repas placées en vis-à-vis. Les gaines **8** sont pourvues d'ouvertures **8₁** et débouchent, par une ouverture **8₁,** à proximité de la paroi inférieure, de manière à permettre une bonne distribution de l'air froid à l'intérieur de l'enceinte alimentaire **3.** Ces gaines de circulation d'air **8,** dites internes, sont raccordées à des gaines d'amenées d'air **9,** dites externes, situées à l'extérieur de l'enceinte alimentaire **3.** Des gaines de retour d'air **9₁** sont montées, également, à l'extérieur de l'enceinte alimentaire **3,** de manière à constituer un circuit de circulation d'air froid fourni par tous types de source de production d'air froid.

Dans l'exemple illustré, le compartiment chaud **5** est équipé de moyens de chauffage constitués par une série de plaques électriques **10** montées de manière superposée, de façon à recevoir chacune la partie d'un plateau-repas destinée à être réchauffée. Bien entendu, il peut être prévu que les moyens de chauffage se trouvent réalisés par des moyens différents. Selon cet exemple, et tel que cela ressort clairement de la **Fig. 3****,** les ouvertures **8₁** débouchent au moins entre les plaques électriques **10** afin d'obtenir une circulation d'air sensiblement homogène dans toute l'enceinte alimentaire **3.** Il doit être compris que les ouvertures **8₁** sont distribuées sur toute la hauteur de la gaine de circulation d'air **8** pour assurer la répartition de l'air dans toute l'enceinte.

Conformément à l'invention, le chariot **1** comporte au moins un raccord **11,** destiné à être relié, temporairement, à un générateur de vapeur **13,** déporté par rapport au chariot **1.** Le raccord **13** permet d'alimenter au moins une canalisation **14** de distribution de vapeur à l'intérieur de l'enceinte alimentaire isolante **3.**

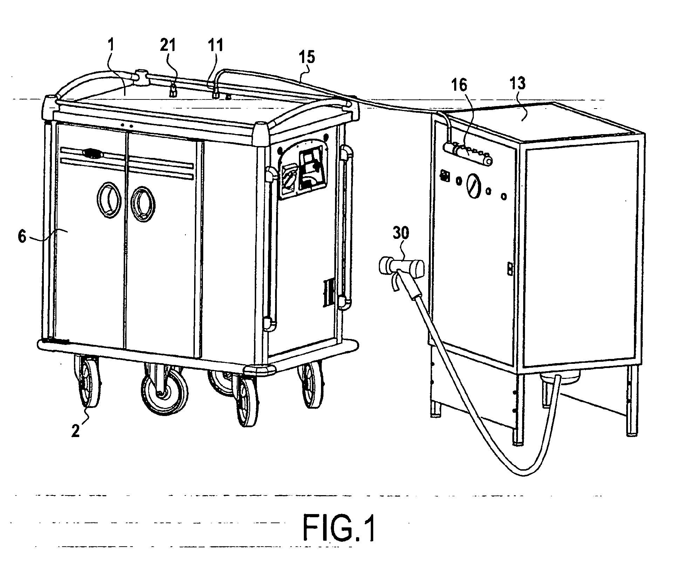

Comme cela ressort plus précisément de la **Fig. 1****,** le générateur de vapeur **13** est constitué par une unité, fixe ou mobile, sur laquelle vient se raccorder, par tout moyen approprié, au moins un chariot isotherme **1** conforme à l'invention. Dans l'exemple illustré, le générateur de vapeur **13** comporte un flexible **15** destiné à être relié au raccord **11** du chariot. Bien entendu, le générateur de vapeur **13** peut être adapté pour recevoir, simultanément, à l'aide par exemple d'une conduite de distribution **16,** une série de chariots isothermes **1** conformes à l'invention. Par exemple, le générateur de vapeur **13** est un générateur à production de vapeur de 8 à 97 kg/h à énergie électrique.

Comme cela ressort plus précisément des **Fig. 2** et **3****,** au moins une canalisation de distribution **14** est montée à l'intérieur de l'enveloppe alimentaire **3,** de manière à permettre une distribution appropriée de la vapeur pour assurer un nettoyage efficace de l'enveloppe alimentaire isolante **3.** Bien entendu, la ou les canalisations **14** sont disposées de manière appropriée pour assurer un nettoyage efficace et complet des parois de l'enceinte alimentaire isolante **3.**

De préférence, la ou les canalisations **14** sont aussi adaptées pour permettre le nettoyage des parois internes des portes **6** qui sont fermées lors de l'opération de nettoyage.

Selon une caractéristique avantageuse de l'invention, une canalisation de distribution **14** de la vapeur est montée à l'intérieur de chaque gaine de circulation d'air interne **8,** aménagée à l'intérieur de l'enveloppe isolante **3.** Avantageusement, une canalisation de distribution de vapeur **14** est montée dans chacune de ces gaines, afin de permettre le nettoyage également de la gaine. A cet effet, et tel que cela ressort de la **Fig. 3****,** la canalisation de distribution **14** s'étend sensiblement selon toute la hauteur de la gaine **8,** en étant pourvue de trous de sortie distribués sur toute la longueur de la canalisation, par exemple, au même niveau que les ouvertures **8₁** de la gaine. La vapeur est également distribuée dans les compartiments chaud **5** et froid **4** de l'enceinte à partir des ouvertures **8₁** aménagées pour le passage de l'air. Une telle disposition assure un nettoyage, à la fois des gaines internes **8** et de l'enceinte alimentaire **3.**

Selon une caractéristique avantageuse de l'invention, le chariot isotherme **1** comporte au moins une canalisation **14₁** de distribution de vapeur à l'intérieur de chaque gaine de circulation d'air, à savoir d'amenée **9** et de retour **9₁,** située à l'extérieur de l'enveloppe isolante alimentaire **3.** Ces gaines externes **9, 9₁** sont, également, nettoyées par la vapeur amenée par les canalisations **14₁.**

Ainsi, tel que cela ressort plus précisément de la **Fig. 2****,** le chariot comporte une conduite **18** de distribution, équipée du raccord **11** et sur laquelle sont raccordées les différentes canalisations de distribution **14, 14₁.**

Selon une caractéristique avantageuse de réalisation de l'invention, le générateur **13** fournit une vapeur de nettoyage et/ou de désinfection. Il est à noter que le générateur peut fournir une vapeur, associée à un produit désinfectant, pour assurer, à la fois, le nettoyage et la désinfection de l'enveloppe isolante, ainsi que des gaines de circulation d'air du chariot, dites internes et externes.

Avantageusement, le nettoyage ou la désinfection du chariot est effectué avec les portes fermées. A cet effet, l'enceinte alimentaire **3** peut être équipée d'une soupape de sécurité **21.** De même, il peut être prévu que la fourniture de la vapeur par le générateur **13** du chariot **1** soit effectuée uniquement si les portes du chariot se trouvent fermées.

L'objet de l'invention vise donc à proposer une installation de nettoyage et/ou de désinfection pour un chariot de transport de plateaux-repas qui est destiné à être raccordé temporairement et régulièrement au générateur de vapeur **13,** afin d'assurer une opération de nettoyage et/ou de désinfection.

Il est à noter que le générateur de vapeur **13** peut être équipé d'un pistolet de nettoyage **30** permettant de nettoyer manuellement le chariot **1** à l'aide de la vapeur fournie par le générateur **13.** A cet effet, le générateur **13** est équipé d'une vanne à deux positions dont l'une permet la distribution de la vapeur pour le pistolet **30.** Dans l'autre position de la vanne, la vapeur est fournie aux canalisations de distribution **14, 14₁** pour le nettoyage ou la désinfection du chariot.

L'invention n'est pas limitée aux exemples décrits et représentés car diverses modifications peuvent y être apportées sans sortir de son cadre.

## Revendications

1. Chariot isotherme, du type comportant une enveloppe alimentaire isolante **(3)** accessible par au moins une porte et munie, intérieurement, de moyens de support permettant le maintien, en position superposée, de plateaux-repas, le chariot comportant au moins un raccord **(11)** pour le nettoyage, destiné à être relié, temporairement, à un générateur de vapeur **(13)** déporté par rapport au chariot, **caractérisé en ce que** des gaines de circulation d'air **(8)** sont aménagées à l'intérieur de l'enveloppe isolante **(3)** et **en ce qu'**au moins une canalisation **(14)** de distribution de la vapeur est raccordée au raccord **(11)** et est montée dans chacune des gaines **(8)** pour distribuer de la vapeur sur toute la hauteur desdites gaines **(8).**

2. Chariot isotherme selon la revendication **1**, **caractérisé en ce qu'**il comporte au moins une canalisation **(14₁)** de distribution de la vapeur à l'intérieur de chaque gaine de circulation d'air **(9, 9₁),** dites externes, situées à l'extérieur de l'enveloppe alimentaire isolante (3).

3. Chariot isotherme selon la revendication 1 ou 2, **caractérisé en ce qu'**il comporte une conduite de distribution **(18)** équipée du raccord (11) et sur laquelle sont raccordées les canalisations de distribution (14, 14₁).

4. Chariot isotherme selon l'une des revendications 1 à 3, **caractérisé en ce que** l'enveloppe alimentaire isolante **(3)** délimite au moins un compartiment froid **(4)** et au moins un compartiment chaud **(5),** équipés chacun d'une gaine de circulation d'air **(8),** dans chacune de laquelle est montée une canalisation de distribution de vapeur **(14).**

5. Chariot isotherme selon la revendication 4, **caractérisé en ce que** le compartiment chaud **(5)** est équipé de moyens de chauffage superposés **(10).**

6. Chariot isotherme selon l'une des revendications 1 à 5, **caractérisé en ce qu'**il comporte une soupape de sécurité (21).

7. Installation pour assurer le nettoyage et/ou la désinfection d'un chariot isotherme de distribution de plateaux-repas, **caractérisée en ce qu'**elle comporte :
■ au moins un chariot **(1)** isotherme conforme à l'une des revendications 1 à 6,
■ et un générateur de vapeur **(13)** pourvu de moyens de raccordement temporaire au raccord **(11)** équipant un chariot.

8. Installation selon la revendication 7, **caractérisée en ce que** le générateur **(13)** fournit une vapeur de nettoyage et/ou de désinfection.

9. Installation selon la revendication 7 ou 8, **caractérisée en ce que** le générateur **(13)** fournit une vapeur lorsque la porte du chariot est fermée.

10. Installation selon l'une des revendications 7 à 19, **caractérisée en ce que** le générateur de vapeur **(13)** est relié soit aux canalisations **(14, 14₁)** de distribution, soit à un pistolet de nettoyage manuel (30).

## Claims

1. Insulated trolley of the type comprising an insulating food-safe jacket (3) accessible via at least one door and innerly provided with supporting means allowing the holding in superimposed position of food trays, the trolley comprising at least one connector (11) for cleaning intended to be temporarily connected to a steam generator (13) offset relative to the trolley, **characterized in that** air circulating ducts (8) are arranged inside the insulating jacket (3) and **in that** at least one line (14) for distributing steam is connected to the connector (11) and is mounted in each of the ducts (8) to distribute steam over the entire height of the said ducts (8).

2. The insulated trolley according to claim 1, **characterized in that** it comprises at least one line (14₁) for distributing steam inside each so-called external air circulating duct (9, 9₁) located outside the insulating food-safe jacket (3).

3. The insulated trolley according to claim 1 or 2, **characterized in that** it comprises a distributor pipe (18) equipped with the connector (11) on which the distributor lines are connected (14, 14₁).

4. The insulated trolley according to one of claims 1 to 3, **characterized in that** the insulated food-safe jacket (3) delimits at least one cold compartment (4) and at least one hot compartment (5) each equipped with an air circulation duct (8) in each of which there is mounted a steam distributing line (14).

5. The insulated trolley according to claim 4, **characterized in that** the hot compartment (5) is equipped with superimposed heating means (10).

6. The insulated trolley according to one of claims 1 to 5, **characterized in that** it comprises a safety valve (21).

7. An installation to ensure the cleaning and/or disinfection of an insulated trolley for the distribution of food trays, **characterized in that** it comprises:
- at least one insulated trolley (1) conforming to one of claims 1 to 6,
- and a steam generator (13) provided with means for temporary connection to the connector (11) fitted to a trolley.

8. The installation according to claim 7, **characterized in that** the generator (13) supplies steam for cleaning and/or disinfection.

9. The installation according to claims 7 or 8, **characterized in that** the generator (13) supplies steam when the door of the trolley is closed.

10. The installation according to one of claims 7 to 9 **characterized in that** the steam generator (13) is connected either to the distributor lines (14, 14₁) or to a manual cleaning gun (30).

## Patentansprüche

1. Isothermischer Wagen, vom Typ umfassend eine isolierende Hülle für Lebensmittelzwecke (3), die über wenigstens eine Tür zugänglich und innen mit Tragmitteln ausgestattet ist, die das Halten von Speisetabletts in übereinander angeordneter Position ermöglichen, wobei der Wagen wenigstens einen Anschluß (11) für die Reinigung umfaßt, der dazu bestimmt ist, vorübergehend mit einem von dem Wagen getrennten Dampferzeuger (13) verbunden zu werden, **dadurch gekennzeichnet, daß** Luftzirkulationskanäle (8) innerhalb der isolierenden Hülle (3) angeordnet sind und daß wenigstens eine Rohrleitung (14) zum Verteilen des Dampfes an den Anschluß (11) angeschlossen ist und in jedem der Kanäle (8) angebracht ist, um Dampf über die gesamte Höhe der Kanäle (8) zu verteilen.

2. Isothermischer Wagen nach Anspruch 1, **dadurch gekennzeichnet, daß** er wenigstens eine Rohrleitung (14₁) zum Verteilen des Dampfes in jedem sogenannten externen Luftzirkulationskanal (9, 9₁), welche außerhalb der isolierenden Hülle für Lebensmittelzwecke (3) gelegen sind, umfaßt.

3. Isothermischer Wagen nach Anspruch 1 oder 2, **dadurch gekennzeichnet, daß** er eine Verteilerleitung (18) umfaßt, die mit dem Anschluß (11) versehen ist und an die die Verteilungsrohrleitungen (14, 14₁) angeschlossen sind.

4. Isothermischer Wagen nach einem der Ansprüche 1 bis 3, **dadurch gekennzeichnet, daß** die isolierende Hülle für Lebensmittelzwecke (3) wenigstens ein Kaltfach (4) und wenigstens ein Heißfach (5) begrenzt, die jeweils mit einem Luftzirkulationsicanal (8) ausgestattet sind, in dem jeweils eine Dampfverteilungsrohrleitung (14) angebracht ist.

5. Isothermischer Wagen nach Anspruch 4, **dadurch gekennzeichnet, daß** das Heißfach (5) mit übereinander angeordneten Heizmitteln (10) ausgestattet ist.

6. Isothermischer Wagen nach einem der Ansprüche 1 bis 5, **dadurch gekennzeichnet, daß** er ein Sicherheitsventil (21) umfaßt.

7. Einrichtung zum Sicherstellen der Reinigung und/oder der Desinfektion eines isothermischen Wagens für die Ausgabe von Speisetabletts, **dadurch gekennzeichnet, daß** sie umfaßt:
- wenigstens einen isothermischen Wagen (1) nach einem der Ansprüche 1 bis 6, und
- einen Dampferzeuger (13), der mit Mitteln zum vorübergehenden Anschließen an den Anschluß (11), mit dem ein Wagen ausgestattet ist, versehen ist.

8. Einrichtung nach Anspruch 7, **dadurch gekennzeichnet, daß** der Erzeuger (13) einen Reinigungs- und/oder Desinfektionsdampf liefert.

9. Einrichtung nach Anspruch 7 oder 8, **dadurch gekennzeichnet, daß** der Erzeuger (13) einen Dampf liefert, wenn die Tür des Wagens geschlossen ist.

10. Einrichtung nach einem der Ansprüche 7 bis 9, **dadurch gekennzeichnet, daß** der Dampferzeuger (13) entweder mit den Verteilungsrohrleitungen (14, 14₁) oder mit einer manuellen Reinigungspistole (30) verbunden ist.
